# EUROPEAN PATENT APPLICATION

(11) **EP 3 608 658 A1**
(43) Date of publication of application: **12.02.2020**
(21) Application number: 18867989.8
(22) Date of filing: 26.09.2018
(51) Int. Cl.: G01N 23/046, G01N 23/083

(54) **X-RAY INSPECTION DEVICE**

(30) Priority: 17.10.2017 JP 2017200834
(71) Applicant: Jed Co., Ltd, Azumino-shi, Nagano 399-8211 (JP)
(72) Inventor: KINOSHITA Osamu, Azumino-shi Nagano 399-8211 (JP)
(74) Representative: Schmitt-Nilson Schraud Waibel Wohlfrom Patentanwälte Partnerschaft mbB
(86) International application number: PCT/JP2018/035629
(87) International publication number: WO 2019/077950

(57) **Abstract**

[Problem] To provide an X-ray inspection device for which there is no need to increase the intensity of X-rays so that the X-rays pass through a plurality of subjects and for which it is possible to prevent the occurrence of metal artifacts in generated CT images, but it is possible to enhance the inspection efficiency of the subject.

[Solution] An X-ray inspection device 1 includes an X-ray generator 3, a two-dimensional X-ray detector 4 arranged so as to sandwich subjects 2A, 2B between the X-ray detector 4 and the X-ray generator 3, and a plurality of rotating tables 5 on which the subjects 2A, 2B are placed. The rotating tables 5 are arranged at positions where radiographic images P1, P2 of the subjects 2A, 2B are projected onto the X-ray detector 4 in a state of not overlapping with each other, and at the time of inspecting the subjects 2A, 2B, the rotating tables 5 rotate simultaneously, the X-ray detector 4 sequentially acquires a plurality of X-ray images in which the radiographic images P1, P2 appear, and a controller connected to the X-ray detector 4 generates CT images of the respective subjects 2A, 2B on the basis of the X-ray images.

## Description

### Field

The present invention relates to an X-ray inspection device for nondestructively inspecting the inside of a subject such as an industrial product.

### Background

Conventionally, industrial X-ray computed tomography (CT) apparatuses have been known (for example, see Patent Literature 1). The X-ray CT apparatus described in Patent Literature 1 includes an X-ray generator, an X-ray detector arranged so as to sandwich an imaging object between the X-ray detector and the X-ray generator, and a rotating table on which the imaging object is placed. In this X-ray CT apparatus, while the X-ray generator is irradiating the imaging object placed on the rotating table with X-rays, the rotating table is rotationally driven, and the X-ray detector acquires an X-ray image of the imaging object for each minute rotation angle. Furthermore, in this X-ray CT apparatus, based on a plurality of X-ray images acquired for 360°, a CT image of the imaging object is generated.

### Citation List

### Patent Literature

Patent Literature 1: Japanese Patent Application Laid-open No. 2008-145394

### Summary

### Technical Problem

The inventor of the present application attempted, in an X-ray inspection device that includes an X-ray generator 103, an X-ray detector 104, and a rotating table 105 as with the X-ray CT apparatus described in Patent Literature 1 and that generates the CT image of a subject 102 (see FIG. 5), to acquire X-ray images of a plurality of subjects 102 simultaneously by the X-ray detector 104 while placing and rotating the subjects 102 on a single rotating table 105 in order to enhance inspection efficiency of the subjects 102. For example, while placing and rotating two subjects 102 on the single rotating table 105, acquiring X-ray images of the two subjects 102 simultaneously by the X-ray detector 104 was attempted.

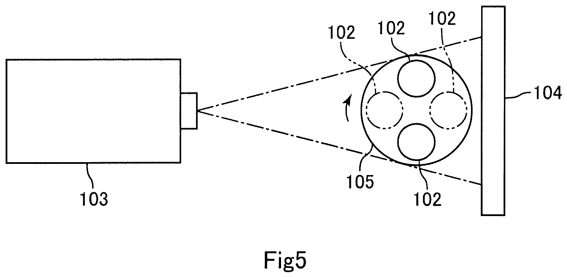

However, in this case, it has become apparent that it is not possible to project radiographic images of the two subjects 102 onto the X-ray detector 104 depending on the rotation angle of the rotating table 105 unless the intensity of X-rays is increased such that the X-rays pass through the two subjects 102, because the two subjects 102 overlap with each other between the X-ray generator 103 and the X-ray detector 104 (for example, see long-dashed double-dotted lines in FIG. 5) in the direction in which the X-ray generator 103 and the X-ray detector 104 face each other while the rotating table 105 makes one rotation.

Furthermore, in this case, it has become apparent that metal artifacts are generated in CT images generated based on the X-ray images even if it was possible to project the radiographic images of the two subjects 102 onto the X-ray detector 104 at all rotation angles of the rotating table 105 and to acquire the X-ray images of the two subjects 102, because the two subjects 102 overlap with each other between the X-ray generator 103 and the X-ray detector 104 in the direction in which the X-ray generator 103 and the X-ray detector 104 face each other while the rotating table 105 makes one rotation.

Thus, an object of the present invention is to provide an X-ray inspection device for which there is no need to increase the intensity of X-rays so that the X-rays pass through a plurality of subjects and for which it is possible to prevent the occurrence of metal artifacts in generated CT images, but it is possible to enhance the inspection efficiency of the subject.

### Solution to Problem

In order to solve the above-described problem, an X-ray inspection device of the present invention includes an X-ray generator configured to irradiate a plurality of subjects with X-rays; a two-dimensional X-ray detector arranged so as to sandwich the subjects between the X-ray detector and the X-ray generator; a plurality of rotating tables on which each of the subjects is placed; and a controller connected to the X-ray detector, wherein the rotating tables are arranged at positions where radiographic images of the respective subjects are projected onto the X-ray detector in a state of not overlapping with each other, and at the time of inspecting the subjects, the rotating tables are configured to rotate simultaneously, the X-ray detector is configured to acquire in sequence a plurality of two-dimensional X-ray images in which the radiographic images of the subjects appear, and the controller is configured to generate CT images of the respective subjects on the basis of the acquired X-ray images.

In the X-ray inspection device of the present invention, a plurality of subjects are arranged between the X-ray generator and the X-ray detector, and each of the subjects is placed on the rotating table individually. Furthermore, in the present invention, at the time of inspecting the subjects, the rotating tables rotate simultaneously, the X-ray detector acquires in sequence a plurality of two-dimensional X-ray images in which the subjects appear, and the controller generates the CT images of the respective subjects on the basis of the acquired X-ray images. Thus, in the present invention, it is possible to perform the inspection of a plurality of subjects simultaneously, and as a result, it is possible to enhance the inspection efficiency of the subject.

Furthermore, in the present invention, because the rotating tables are arranged at positions where the radiographic images of the respective subjects are projected onto the X-ray detector in a state of not overlapping with each other, while the rotating tables make one rotation, the subjects never overlap with each other between the X-ray generator and the X-ray detector in the direction in which the X-ray generator and the X-ray detector face each other. Thus, in the present invention, the X-rays only need to pass through a single subject, and there is no need to increase the intensity of X-rays such that the X-rays pass through a plurality of subjects. Furthermore, in the present invention, it is possible to prevent the occurrence of metal artifacts in the generated CT images.

Moreover, in the present invention, because the radiographic images of the subjects are projected onto the common X-ray detector, as compared with the case where a plurality of small-sized X-ray detectors onto which the radiographic images of the subjects are projected individually are provided, it is possible to reduce the cost of the X-ray inspection device. Furthermore, when a plurality of small-sized X-ray detectors are provided, it needs to adjust the X-ray detectors. However, in the present invention, it only needs to adjust a single common X-ray detector. Furthermore, when a plurality of small-sized X-ray detectors are provided, because each of the X-ray detectors may malfunction, a failure in the X-ray inspection device is more likely to occur. However, in the present invention, failure is less likely to occur.

In the present invention, when generating a CT image of a single subject, it is preferable that the controller generate the CT image by performing a predetermined calculation using, in each of the X-ray images, only a portion including the radiographic image of the single subject for which the CT image is generated. With such a configuration, it is possible to generate the CT image appropriately in a short time.

In the present invention, when generating the CT image of a single subject, the controller may generate the CT image by cutting out, in each of the X-ray images, a portion including the radiographic image of the single subject for which the CT image is generated and performing a predetermined calculation using only the cutout portion. Even in this case, it is possible to generate the CT image appropriately in a short time.

### Advantageous Effects of Invention

As in the foregoing, in the X-ray inspection device of the present invention, there is no need to increase the intensity of X-rays so that the X-rays pass through a plurality of subjects and it is possible to prevent the occurrence of metal artifacts in the generated CT images, but it is possible to enhance the inspection efficiency of the subject.

### Brief Description of Drawings

FIG. 1 is a perspective view for explaining a schematic configuration of an X-ray inspection device according to an embodiment of the present invention.
FIG. 2 is a schematic diagram for explaining a configuration of the X-ray inspection device illustrated in FIG. 1.
FIG. 3 is a diagram for explaining a method of generating CT images in a controller illustrated in FIG. 2.
FIG. 4 is a schematic diagram for explaining a configuration of an X-ray inspection device according to another embodiment of the present invention.
FIG. 5 is a diagram for explaining a problem of the present invention.

### Description of Embodiments

While referring to the accompanying drawings, the following describes exemplary embodiments of the present invention.

### Configuration of X-ray Inspection Device

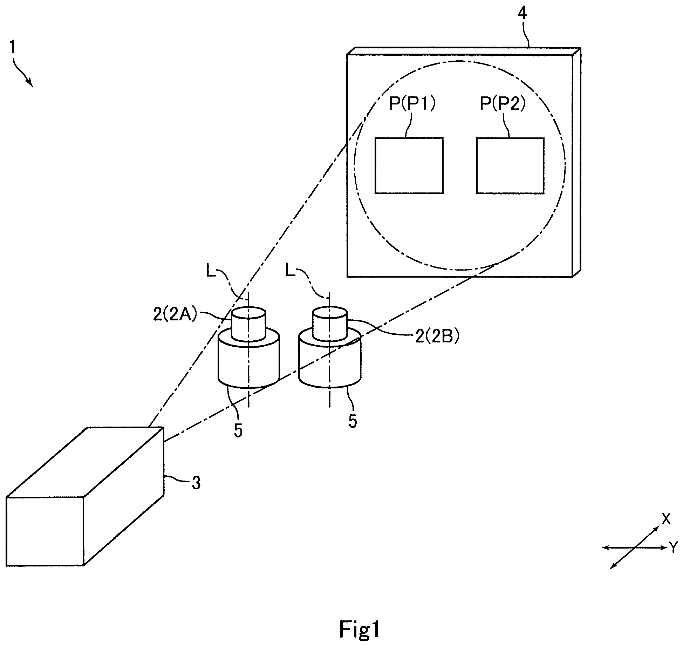

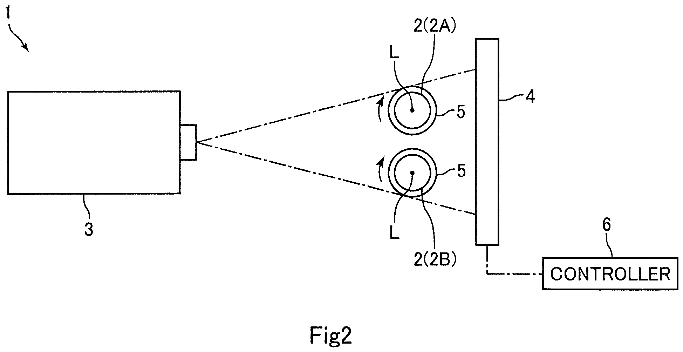

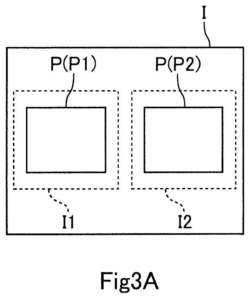

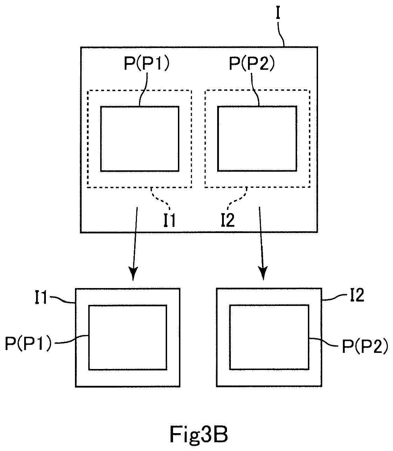

FIG. 1 is a perspective view for explaining a schematic configuration of an X-ray inspection device 1 according to an embodiment of the present invention. FIG. 2 is a schematic diagram for explaining the configuration of the X-ray inspection device 1 illustrated in FIG. 1. FIG. 3 is a diagram for explaining a method of generating CT images in a controller 6 illustrated in FIG. 2.

The X-ray inspection device 1 of the present embodiment is a device for nondestructively inspecting the inside of a subject (inspected object) 2 such as an industrial product. This X-ray inspection device 1 includes a single X-ray generator 3 that irradiates a plurality of subjects 2 with X-rays, a single two-dimensional X-ray detector (area sensor) 4 that is arranged so as to sandwich the subjects 2 between the X-ray detector 4 and the X-ray generator 3, a plurality of rotating tables 5 on which each of the subjects 2 is placed, and a controller 6 connected to the X-ray detector 4.

In the present embodiment, two subjects 2 are arranged between the X-ray generator 3 and the X-ray detector 4, the X-ray generator 3 irradiates the two subjects 2 with X-rays, and onto the X-ray detector 4, radiographic images P of the two subjects 2 are projected. The X-ray inspection device 1 further includes two rotating tables 5 on which each of the two subject 2 is individually placed, and on each of the rotating tables 5, a single subject 2 is placed. In the following description, when the two subjects 2 are distinguished and represented, one of the subjects 2 out of the two subjects 2 is referred to as "subject 2A" and the other subject 2 is referred to as "subject 2B". When two radiographic images P projected onto the X-ray detector 4 are distinguished and represented, the radiographic image P of the subject 2A is referred to as "radiographic image P1" and the radiographic image P of the subject 2B is referred to as "radiographic image P2".

The X-ray generator 3 emits conical X-rays (cone beams) toward the two subjects 2. The X-ray generator 3 is arranged such that the optical axis of X-rays to be emitted is substantially parallel to the horizontal direction. The X-ray detector 4 is arranged such that a light-receiving surface of the X-ray detector 4 is orthogonal to the horizontal direction and faces the X-ray generator 3 side. The rotating table 5 is coupled to a rotation mechanism that rotates the rotating table 5. The rotating table 5 rotates with the up-and-down direction as the axial direction of rotation. The subject 2 is arranged on a rotation axis L of the rotating table 5. In the two rotating tables 5, a common rotation mechanism that rotates the two rotating tables 5 together may be coupled to, or an individual rotation mechanism may be coupled to each of the two rotating tables 5 such that the two rotating tables 5 are able to rotate individually.

The two rotating tables 5 are arranged at positions where the radiographic images P1, P2 of the two subjects 2 are projected onto the X-ray detector 4 in a state of not overlapping with each other. That is, the two rotating tables 5 are arranged at positions where the radiographic image P1 of the subject 2A and the radiographic image P2 of the subject 2B are projected onto the X-ray detector 4 in a state of being separated (a spaced state) so as not to overlap with each other. Specifically, assuming that the X direction of FIG. 1 in which the X-ray generator 3 and the X-ray detector 4 face each other is the front-and-back direction and the Y direction of FIG. 1 that is orthogonal to the up-and-down direction and the front-and-back direction is the left-and-right direction, the two rotating tables 5 are arranged in a state of being spaced in the left-and-right direction such that the two subjects 2 do not overlap with each other in the front-and-back direction even if the two rotating tables 5 make one rotation. Furthermore, the two rotating tables 5 are arranged at the same positions in the front-and-back direction.

On the X-ray detector 4, the radiographic images P1, P2 in a state of being separated so as not to overlap with each other are projected. In the present embodiment, on the X-ray detector 4, the radiographic images P1, P2 of the entire two subjects 2 are projected. That is, on the X-ray detector 4, the radiographic images P1, P2 of the entire two subjects 2 including the axes of rotation of the two subjects 2 (the rotation axes L of the rotating tables 5) are projected.

At the time of inspecting the two subjects 2, the X-ray generator 3 irradiates the two subjects 2 with X-rays. Furthermore, at the time of inspecting the two subjects 2, the two rotating tables 5 on which the subjects 2 are placed rotate simultaneously and rotate at the same speed. Moreover, at the time of inspecting the two subjects 2, the X-ray detector 4 acquires in sequence a plurality of two-dimensional X-ray images I (see FIG. 3) in which the two radiographic images P1, P2 appear. Specifically, the X-ray detector 4 acquires the X-ray image I each time the two subjects 2 are rotated by a certain angle. For example, the X-ray detector 4 acquires the X-ray image I each time the two subjects 2 are rotated by 1°. That is, the X-ray detector 4 acquires in sequence 360 X-ray images I at the time of inspecting the two subjects 2.

The controller 6 generates CT images of the respective two subjects 2 on the basis of the acquired X-ray images I. For example, the controller 6 generates the CT image of the subject 2A by performing a predetermined calculation using, in each of the X-ray images I, only a portion I1 including the radiographic image P1 of the subject 2A when generating the CT image of the subject 2A, and generates the CT image of the subject 2B by performing a predetermined calculation using, in each of the X-ray images I, only a portion 12 including the radiographic image P2 of the subject 2B when generating the CT image of the subject 2B (see FIG. 3(A)). That is, when generating the CT image of a single subject 2A or 2B, the controller 6 generates the CT image by performing the predetermined calculation using, in each of the X-ray images I, only the portion I1 or I2 including the radiographic image P of the single subject 2A or 2B for which the CT image is generated.

Alternatively, the controller 6 generates the CT image of the subject 2A by cutting out, in each of the X-ray images I, the portion I1 including the radiographic image P1 of the subject 2A and performing a predetermined calculation using only the cutout portion I1 when generating the CT image of the subject 2A, and generates the CT image of the subject 2B by cutting out, in each of the X-ray images I, the portion 12 including the radiographic image P2 of the subject 2B and performing a predetermined calculation using only the portion I2 when generating the CT image of the subject 2B (see FIG. 3(B)). That is, when generating the CT image of a single subject 2A or 2B, the controller 6 generates the CT image by cutting out, in each of the X-ray images I, the portion I1 or I2 including the radiographic image P of the single subject 2A or 2B for which the CT image is generated, and performing the predetermined calculation using only the cutout portion I1 or 12.

### Main Effects of Present Embodiment

As in the foregoing, in the present embodiment, two subjects 2 are arranged between the X-ray generator 3 and the X-ray detector 4, and each of the subjects 2 is individually placed on the rotating table 5. Furthermore, in the present embodiment, at the time of inspecting the two subjects 2, the two rotating tables 5 rotate simultaneously, the X-ray detector 4 acquires in sequence a plurality of X-ray images I in which the radiographic images P of the two subjects 2 appear, and the controller 6 generates the CT images of the respective two subjects 2 on the basis of the acquired X-ray images I. Thus, in the present embodiment, it is possible to perform the inspection of two subjects 2 simultaneously, and as a result, it is possible to enhance the inspection efficiency of the subject 2.

In the present embodiment, the two rotating tables 5 are arranged at positions where the radiographic image P1 of the subject 2A and the radiographic image P2 of the subject 2B are projected onto the X-ray detector 4 in a state of not overlapping with each other, and while the rotating tables 5 make one rotation, the two subjects 2 never overlap with each other between the X-ray generator 3 and the X-ray detector 4 in the front-and-back direction. Thus, in the present embodiment, the X-rays only need to pass through a single subject 2, and there is no need to increase the intensity of X-rays such that the X-rays pass through two subjects 2. Furthermore, in the present embodiment, it is possible to prevent the occurrence of metal artifacts in the generated CT images.

In the present embodiment, on a single X-ray detector 4, the radiographic images P of two subjects 2 are projected. Thus, in the present embodiment, as compared with the case where two small-sized X-ray detectors 4 onto which two radiographic images P are projected individually are provided, it is possible to reduce the cost of the X-ray inspection device 1. Furthermore, in the present embodiment, because the number of the X-ray generator 3 is one, as compared with the case where two small-sized X-ray detectors 3 are provided, it is possible to reduce the cost of the X-ray inspection device 1.

Furthermore, when two small-sized X-ray detectors 4 are provided, the adjustment of the two X-ray detectors 4 is needed. However, in the present embodiment, it only needs to adjust a single X-ray detector 4. When two small-sized X-ray detectors 4 are provided, because each of the two X-ray detectors 4 may malfunction, a failure in the X-ray inspection device 1 is more likely to occur. However, in the present embodiment, failure is less likely to occur. Furthermore, when the X-ray generator 3 that irradiates the subject 2A with X-rays and the X-ray generator 3 that irradiates the subject 2B with X-rays are provided individually, the adjustment of the two X-ray generators 3 is needed. However, in the present embodiment, it only needs to adjust a single X-ray generator 3. When two X-ray generators 3 are provided, because each of the two X-ray generators 3 may malfunction, a failure in the X-ray inspection device 1 is more likely to occur. However, in the present embodiment, failure is less likely to occur.

In the present embodiment, when generating the CT image of a single subject 2A or 2B, the controller 6 generates the CT image by performing the predetermined calculation using, in each of the X-ray images I, only the portion I1 or I2 including the radiographic image P of the single subject 2A or 2B for which the CT image is generated. Alternatively, in the present embodiment, when generating the CT image of a single subject 2A or 2B, the controller 6 generates the CT image by cutting out, in each of the X-ray images I, the portion I1 or I2 including the radiographic image P of the single subject 2A or 2B for which the CT image is generated and performing the predetermined calculation using only the cutout portion I1 or 12. Thus, in the present embodiment, it is possible to generate the CT image appropriately in a short time.

### Other Embodiments

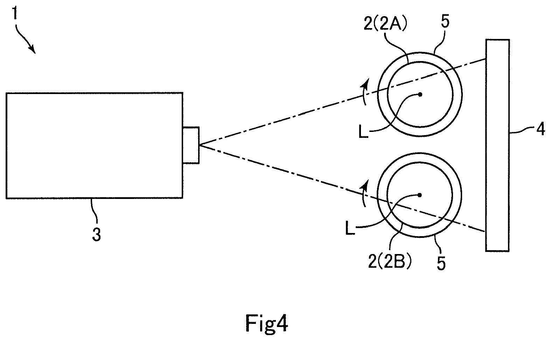

In the above-described embodiment, onto the X-ray detector 4, the radiographic images P1, P2 of a part of the two subjects 2 may be projected (see FIG. 4). Even in this case, onto the X-ray detector 4, the radiographic images P1, P2 of a part of the two subjects 2 including the axes of rotation of the two subjects 2 (the rotation axes L of the rotating tables 5) are projected. In the example illustrated in FIG. 4, although the size of the subject 2 illustrated in FIG. 4 is larger than that of the subject 2 illustrated in FIG. 2, the size of the subject 2 illustrated in FIG. 4 and that of the subject 2 illustrated in FIG. 2 may be equal. In this case, the two rotating tables 5 are arranged at positions closer to the X-ray generator 3 than those positions illustrated in FIG. 2, and onto the X-ray detector 4, the radiographic images P1, P2 of a part of the two subjects 2 are projected.

In the above-described embodiment, the number of the subjects 2 arranged between the X-ray generator 3 and the X-ray detector 4 may be three or more. In this case, the X-ray inspection device 1 includes three or more rotating tables 5 on which each of the three or more subjects 2 is individually placed, and on each of the three or more rotating tables 5, a single subject 2 is placed. Furthermore, in this case, the X-ray generator 3 irradiates all of the three or more subjects 2 with X-rays, and onto the X-ray detector 4, the radiographic images P of all of the three or more subjects 2 are projected in a state of being separated so as not to overlap with each other.

In the above-described embodiment, the X-ray inspection device 1 may include a single X-ray generator 3, a single X-ray detector 4 that is arranged so as to sandwich two subjects 2 between the X-ray detector 4 and the X-ray generator 3, another single X-ray detector 4 that is separately arranged so as to sandwich other two subjects 2 between the X-ray detector 4 and the X-ray generator 3, and four rotating tables 5 on which each of the four subjects 2 is placed, for example. That is, the X-ray inspection device 1 may include a single X-ray generator 3, two X-ray detectors 4, and four rotating tables 5. In this case, the X-ray generator 3 irradiates four subjects 2 with X-rays, and onto one of the X-ray detectors 4, two radiographic images P are projected in a state of not overlapping with each other, and onto the other of the X-ray detectors 4 also, two radiographic images P are projected in a state of not overlapping with each other.

In the above-described embodiment, the optical axis of the X-rays that the X-ray generator 3 emits may be substantially parallel to the up-and-down direction (vertical direction) or may be inclined with respect to the up-and-down direction and the horizontal direction. Furthermore, in the above-described embodiment, the rotation speeds of the two rotating tables 5 may be different. Moreover, in the above-described embodiment, the two rotating tables 5 may be displaced in the front-and-back direction.

### Reference Signs List

- 1: X-RAY INSPECTION DEVICE
- 2, 2A, 2B: SUBJECT
- 3: X-RAY GENERATOR
- 4: X-RAY DETECTOR
- 5: ROTATING TABLE
- 6: CONTROLLER
- I: X-RAY IMAGE
- P, P1, P2: RADIOGRAPHIC IMAGE

## Claims

1. An X-ray inspection device comprising:
an X-ray generator configured to irradiate a plurality of subjects with X-rays;
a two-dimensional X-ray detector arranged so as to sandwich the subjects between the X-ray detector and the X-ray generator;
a plurality of rotating tables on which each of the subjects is placed; and
a controller connected to the X-ray detector, wherein
the rotating tables are arranged at positions where radiographic images of the respective subjects are projected onto the X-ray detector in a state of not overlapping with each other, and
at a time of inspecting the subjects, the rotating tables are configured to rotate simultaneously, the X-ray detector is configured to acquire in sequence a plurality of two-dimensional X-ray images in which the radiographic images of the subjects appear, and the controller is configured to generate computed tomography (CT) images of the respective subjects on a basis of the acquired X-ray images.

2. The X-ray inspection device according to claim 1, wherein the controller is configured, when generating the CT image of a single subject, to generate the CT image by performing a predetermined calculation using, in each of the X-ray images, only a portion including the radiographic image of the single subject for which the CT image is generated.

3. The X-ray inspection device according to claim 1, wherein the controller is configured, when generating the CT image of a single subject, to generate the CT image by cutting out, in each of the X-ray images, a portion including the radiographic image of the single subject for which the CT image is generated and performing a predetermined calculation using only the cutout portion.
